# EUROPÄISCHE PATENTANMELDUNG

(11) **EP 1 895 675 A2**
(43) Veröffentlichungstag der Anmeldung: **05.03.2008**
(21) Anmeldenummer: 07113582.6
(22) Anmeldetag: 01.08.2007
(51) Int. Cl.: H04B 3/54

(54) **Kommunikationsvorrichtung und Datenübertragungsverfahren**

(30) Priorität: 25.08.2006 DE 102006039985
(71) Anmelder: ROBERT BOSCH GMBH, 70442 Stuttgart (DE)
(72) Erfinder: Schauer, Karl-Heinz, 71665, Vaihingen (DE); Mader, Bernhard, 71394, Kernen (DE); Pietsch, Ingo, 76131, Karlsruhe (DE); Schmidt, Timo, 71154, Nufringen (DE); Holst, Thomas, 70499, Stuttgart (DE)

(57) **Zusammenfassung**

Die Kommunikationsvorrichtung beinhaltet einen Versorgungsanschluss 41, 42, der an eine zwei-Punkt-geregelte Stromversorgung anschließbar ist; eine Pulsweitenerfassungseinrichtung 45, welche mit dem Versorgungsanschluss 41, 42 gekoppelt ist und eine Pulsweite von Strompulsen erfasst, die durch den Versorgungsanschluss 41, 42 fließen, und eine Signalverarbeitungseinrichtung 47, die einer ersten erfassten Pulsweite einen ersten logischen Pegel und einer zweiten erfassten Pulsweite einen zweiten logischen Pegel zuordnet.

## Beschreibung

### STAND DER TECHNIK

Die vorliegende Erfindung betrifft eine Kommunikationsvorrichtung, insbesondere eine Kommunikationseinrichtung, die in einem Injektor, Aktuator oder einem Magnetspulenaktuator integriert ist. Dazu betrifft die Erfindung ein Datenübertragungsverfahren, das die vorgenannte Kommunikationseinrichtung verwenden kann.

Eine der Erfindung zugrunde liegende Problematik wird nachfolgend beispielhaft für Einspritzventile oder Injektoren von Brennkraftmaschinen beschrieben.

Moderne Motoren erreichen eine hohe Energieausbeute pro verbrauchter Kraftstoffmengeneinheit und einen schadstoffarmen Ausstoß unter Anderem auf Grund einer präzisen Einspritzung des Kraftstoffs in die Verbrennungskammern. Hierbei wird sowohl eine hohe Genauigkeit des Einspritzzeitpunkts als auch der Einspritzmenge durch eine Einspritzsteuerung gewährleistet. Die Einspritzsteuerung steuert mehrere Einspritzventile an.

Die Einspritzventile weisen herstellungsbedingt Toleranzen bezüglich der Einspritzmenge in Abhängigkeit von Parametern wie der Ansteuerzeit, dem Brennstoffkammerdruck, etc auf. Um trotz dieser Toleranzen die präzise Einspritzung zu gewährleisten, wird jedes Einspritzventil individuell vermessen. Die hierbei ermittelten Kennlinien des jeweiligen Einspritzventils werden auf diesem z.B. als Barcode aufgedruckt oder in einem EEPROM des Einspritzventils gespeichert, wie in der DE 102 44 094 A1 beschrieben.

Vor oder beim Einsetzen der Einspritzventile werden die Kennlinien ein- oder ausgelesen und an die Einspritzsteuerung übermittelt. Die Einspritzventile nach der DE 102 44 094 weisen neben dem EEPROM auf den Einspritzventilen einen zusätzlichen Datenanschluss auf, über welche die Kennlinien durch die Einspritzsteuerung auslesbar sind. Die zusätzlichen Anschlüsse und Datenleitungen erfordern einen erhöhten Verdrahtungsaufwand und stellen zusätzliche potentielle Schwachstellen, zum Beispiel auf Grund von Wackelkontakten, dar.

### OFFENBARUNG DER ERFINDUNG

Die erfindungsgemäße Kommunikationsvorrichtung nach Anspruch 1 benötigt vorteilhafterweise keine zusätzliche Datenleitung, sondern kann Daten über die bestehenden Versorgungsleitungen übertragen.

Erfindungsgemäß ist nach einem ersten Aspekt eine Kommunikationsvorrichtung vorgesehen, die aufweist:
- einen Versorgungsanschluss, der an eine zwei-Punkt-geregelte Stromversorgung anschließbar ist,
- eine Pulsweitenerfassungseinrichtung, welche mit dem Versorgungsanschluss gekoppelt ist und eine Pulsweite von Strompulsen erfasst, die durch den Versorgungsanschluss fließen, und
- eine Signalverarbeitungseinrichtung, die einer ersten erfassten Pulsweite einen ersten logischen Pegel und einer zweiten erfassten Pulsweite einen zweiten logischen Pegel zuordnet.

Gemäß einem zweiten Aspekt der Erfindung ist eine Kommunikationsvorrichtung vorgesehen, mit
- einem Versorgungsanschluss, der an einer zwei-Punkt-geregelte Stromversorgung angeschlossen ist, und
- einer Schalteinrichtung, die zum Übertragen eines ersten logischen Pegels den Stromfluss durch den Versorgungsanschluss erhöht, um eine Pulsweite von Strompulsen der zwei-Punkt-geregelten Stromversorgung zu verringern.

Eine zwei-Punkt-geregelte Stromversorgung speist einen Strom in einen Verbraucher gepulst ein. Dabei beginnt ein neuer Strompuls, wenn der Strom durch einen Messwiderstand der Stromversorgung einen unteren Schwellwert unterschreitet, und der neue Strompuls endet, wenn der Strom durch den Messwiderstand einen oberen Schwellwert überschreitet. Die Pulsrate, Pulsweite, Periode der Pulse sind von dem Stromfluss durch den Verbraucher abhängig. Die Schalteinrichtung verändert diesen Stromfluss und beeinflusst dadurch die Pulsweite. Eine Empfangseinrichtung gebildet durch eine Pulsweitenerfassungseinrichtung und eine Signalverarbeitungseinrichtung werten die Pulsweite auf ihren Informationsgehalt hin aus.

Eine Datenleitung neben den Versorgungsleitungen wird für die Kommunikationsvorrichtung daher nicht benötigt.

Die Kommunikationsvorrichtung nach dem ersten und zweiten Aspekt können in einer kombinierten Sende- und Empfangseinrichtung integriert sein.

Gemäß einer Ausgestaltung weist die Kommunikationseinrichtung eine Konstantstromquelle auf, welche über die Schalteinrichtung mit dem Versorgungsanschluss verbindbar ist. Die Konstantstromquelle erhöht den Stromfluss durch einen zusätzlichen Stromfluss durch den Messwiderstand der zwei-Punkt-geregelten Stromquelle und führt somit zu einem frühzeitigen Beenden des Strompulses. Vorteilhafterweise ist der zusätzlich eingespeiste Strom unabhängig von äußeren Bedingungen insbesondere dem Stromfluss durch den Verbraucher.

Nach einer anderen Ausgestaltung ist ein Bypass-Widerstand oder ein Bypass-Kondensator vorgesehen, der eine Serienschaltung mit der Schalteinrichtung bildet und wobei die Serienschaltung den Versorgungsanschluss mit einem Referenzpotential verbindet. Hierdurch kann eine einfache Schaltung realisiert werden. Der Bypass-Kondensator erhöht zumindest kurzzeitig den Stromfluss.

In einer Ausgestaltung ist die Kommunikationsvorrichtung in einem Aktuator und/oder einer Ansteuerungseinrichtung für den Aktuator integriert. Der Aktuator kann Betätigungselemente, Einspritzventile, Pumpsysteme, Schrittmotoren etc. umfassen.

Gemäß einer Weiterbildung ist eine Schutzschaltung vorgesehen, die die Schalteinrichtung sperrend schaltet, wenn die Pulsweitenerfassungseinrichtung eine Pulsweite erfasst, die außerhalb eines vorbestimmten Intervalls ist. Eine gleichzeitige Kommunikation und Betätigung des Aktuators können sich wechselseitig negativ beeinflussen oder auch zur Beschädigung der Kommunikationseinrichtung führen. Die Schaltfrequenz liegt bei einer Betätigung des Aktuators in einem für das Steuerungssystem und den Aktuator typischen Bereich. Daher erfolgt keine Kommunikation, wenn die Schaltfrequenz in diesem typischen oder dem vorbestimmten Bereich liegt.

Nach einem weitern Aspekt der Erfindung ist ein Datenübertragungsverfahren zum Empfangen bereitgestellt, das folgende Schritte aufweist
- Verbinden des Versorgungsanschluss mit einer Zwei-Punkt-Stromversorgung;
- Erfassen der Pulsweite von Strompulsen der Zwei-Punkt-Stromversorgung an dem Versorgungsanschluss; und
- Zuordnen eines ersten logischen Pegels zu einer ersten erfassten Pulsweite und eines zweiten logischen Pegels zu einer zweiten erfassten Pulsweite.

Nach einem weitern Aspekt der Erfindung ist ein Datenübertragungsverfahren zum Senden bereitgestellt, das folgende Schritte aufweist und insbesondere mit der erfindungsgemäßen Kommunikationseinrichtung ausführbar ist:
- Verbinden des Versorgungsanschluss mit einer Zwei-Punkt-Stromversorgung; und
- Erhöhen des Stromflusses durch den Versorgungsanschluss zum Übertragen eines ersten logischen Pegels von mindestens zwei logischen Pegeln.

Gemäß einer Ausgestaltung werden Daten an einen Aktuator übertragen, welcher durch eine Zwei-Punkt-Stromversorgung aktiviert wird, wenn der mittlere Strom einen Schwellwert überschreitet, und eine Datenübertragung erfolgt, wenn der mittlere Strom geringer als der Schwellwert ist.

### KURZE BESCHREIBUNG DER ZEICHNUNGEN

In den Figuren zeigen:
- Fig. 1: ein Blockdiagramm einer ersten Ausführungsform der erfindungsgemäßen Kommunikationseinrichtung;
- Fig. 2a - 2d: Signalverläufe zu der ersten Ausführungsform;
- Fig. 3: ein Blockdiagramm einer zweiten Ausführungsform der erfindungsgemäßen Kommunikationseinrichtung;
- Fig. 4a - 4d: Signalverläufe zu der zweiten Ausführungsform;
- Fig. 5: ein Blockdiagramm einer dritten Ausführungsform der erfindungsgemäßen Kommunikationseinrichtung; und
- Fig. 6: Ablaufdiagramm eines Kommunikationsverfahrens für eine der Ausführungsformen.

- Fig. 7: ein Blockdiagramm einer vierten Ausführungsform der erfindungsgemäßen Kommunikationseinrichtung;

### AUSFÜHRUNGSFORMEN DER ERFINDUNG

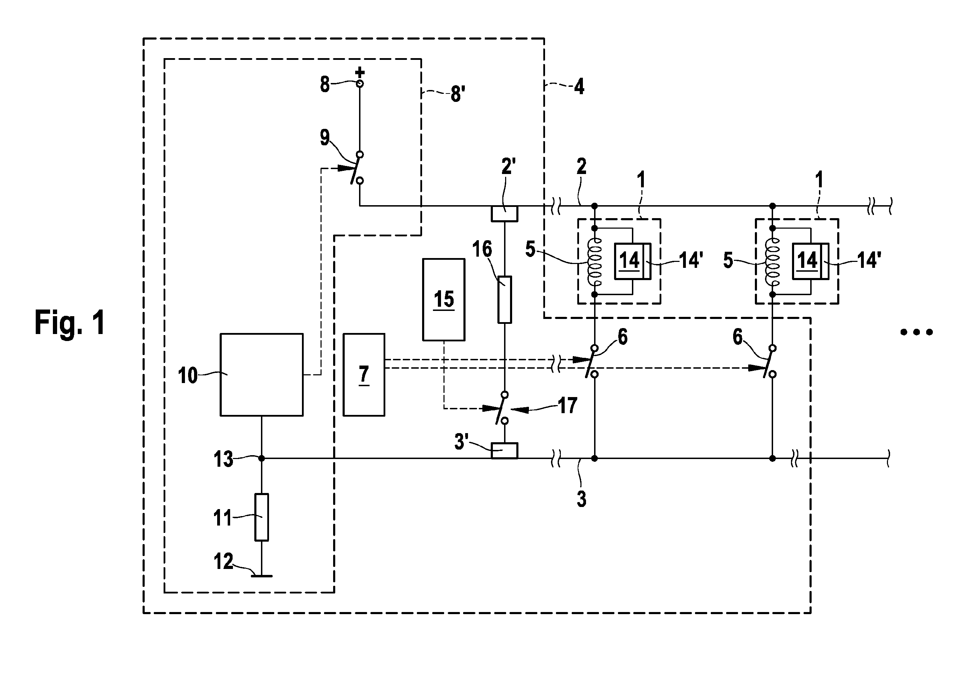

Eine erste Ausführungsform wird in Bezug auf Fig. 1 erläutert. Eine Mehrzahl von parallel geschalteten Einspritzventilen 1 mit Versorgungsanschlüssen 2', 3' ist über einen gemeinsamen Versorgungsstrang 2, 3 mit einer Steuereinheit 4 verbunden. Die Einspritzventile 1 weisen einen Elektromagneten und eine entsprechende Spule 5 auf, die zum Öffnen einer Düse des Einspritzventils 1 dient. Durch Einspeisen eines Stromes in den Leitungsstrang 2, 3 mittels der Steuereinheit 4 wird die Düse geöffnet. Folglich wird Brennstoff durch das Einspritzventil 1 in die Brennstoffkammer eingespritzt. Die Adressierung der individuellen Einspritzventile 1 erfolgt durch Schaltelemente 6, die durch eine Adressierungseinheit 7 der Steuereinheit 4 geschaltet werden.

Es erweist sich als zweckmäßig, den Strom zum Aktivieren der Einspritzventile 1, d.h. zum Öffnen der Düsen, nicht als Gleichstrom sondern als getakteten Strom bereitzustellen. Die Gründe hierfür sind geringere Verluste in der Versorgung der einzelnen Einspritzventile 1.

Der gepulste oder geschaltete Strom wird durch eine Zweipunktregelung erzeugt. Diese Zweipunktregelung 8' umfasst eine Spannungsquelle 8, ein Schaltelement 9, eine Steuereinheit 10 und einen Messwiderstand 11. Die Steuereinheit 10 erfasst einen Stromfluss von der Spannungsquelle 8 durch die Verbraucher, d.h. in diesem Fall die Einspritzventile 1, durch den Messwiderstand 11 zu einer Masse 12. Es wird zweckmäßigerweise Spannung an einem Messabgriff 13 bei dem Messwiderstand 11 erfasst. Die Steuereinrichtung 10 vergleicht die erfasste Spannung mit einem oberen Schwellwert und schaltet bei Überschreiten des oberen Schwellwertes das Schaltelement 9 in einen sperrenden Zustand. Daraufhin verringert sich der Stromfluss durch den Messwiderstand 11 und die Spannung an dem Messabgriff 13 fällt entsprechend einer Zeitkonstante ab. Die Zeitkonstante ist überwiegend durch die Induktivität der Spritzventile 1 und deren Elektromagneten 5 sowie den ohmschen Widerständen der Zuleitungen bestimmt. Nachdem die Spannung an dem Messabgriff 13 unterhalb eines unteren Schwellwerts fällt, wird das Schaltelement 9 durch die Steuereinrichtung 10 durchgeschaltet. Der Strom durch den Messwiderstand 11 steigt nun entsprechend der vorherigen Zeitkonstante wieder an, und ein weiterer Zyklus der zweipunktgeregelten Stromversorgung 8' beginnt. Die zwei Punkte sind entsprechend der untere und der obere Schwellwert.

Die beschriebene erste Ausführungsform ermöglicht eine Kommunikation zwischen der Steuereinheit 4 und jedem der Einspritzventile 1. Dabei sind hier beispielhaft die Steuereinheit 4 nur als sendende Einrichtung und die Einspritzventile 1 nur als empfangende Einrichtung beschrieben.

Die Einspritzventile 1 weisen jeweils eine Pulsweitenerfassungseinrichtung 14 auf. Wie in Fig. 1 dargestellt, kann diese Spule des Elektromagneten 5 parallel geschaltet sein. Die Pulsweitenerfassungseinrichtung bestimmt die Pulslänge eines Strompulses der zweipunktgeregelten Stromversorgung 8'. Anstelle der Pulsweite kann die Pulsweitenerfassungseinrichtung auch die Wiederholungsrate der Pulse oder ähnliche Größen erfassen, die in eindeutiger Weise mit der Pulsweite gekoppelt sind. Die Pulsweite hängt von der Zeitkonstante ab, die durch den Strompfad zwischen der Spannungsquelle 8 und der Masse 12 vorgegeben ist.

In der Steuereinheit 4 oder neben der Steuereinheit 4 sind eine Sendeeinrichtung 15 und ein weiterer Stromflusspfad sowie eine Schalteinheit 17 angeordnet. Eine einfache Implementierung des Stromflusspfades ist ein passiver Widerstand 16 oder ein Kondensator. Der zusätzliche Stromflusspfad kann über die Schalteinheit 17 mit den Einspritzventilen 1 parallel in den Stromflusspfad zwischen der Spannungsversorgung 8 und der Masse 12 geschaltet werden. In der in Fig. 1 gezeigten Variante ist der zuschaltbare zusätzliche Stromflusspfad 16, 17 zwischen die zuführende Stromversorgungsleitung 2 und die rückführende Stromversorgungsleitung 3 geschaltet. Das Schaltelement 17 wird durch die Sendeeinrichtung 15 betätigt.

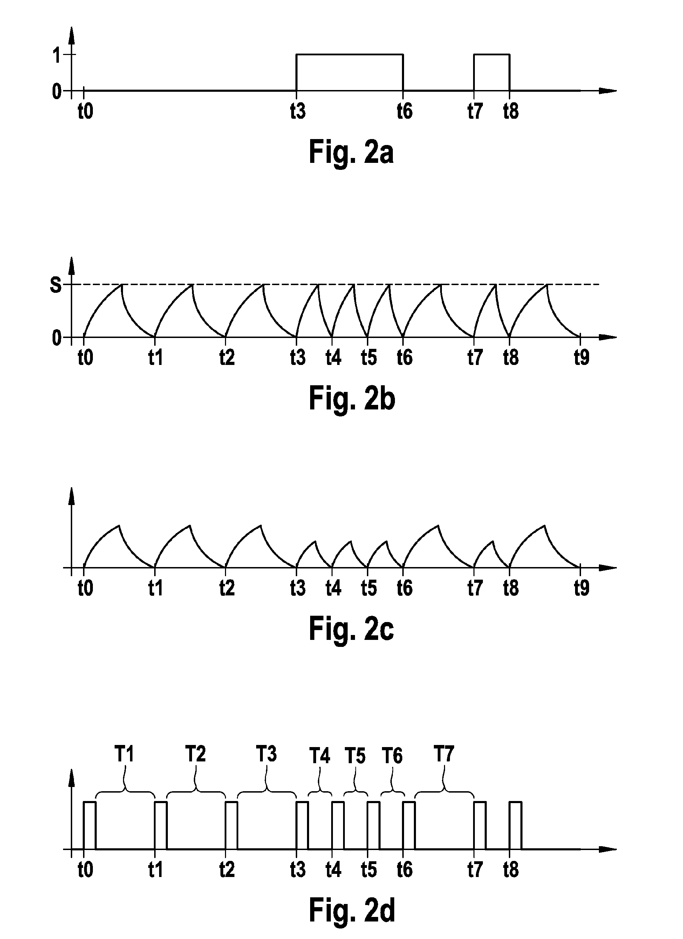

Die Funktionsweise der Datenübertragung mittels der Sendeeinrichtung 15 und dem zusätzlichen Strompfad 16 wird nachfolgend beispielhaft an den Fig. 2a bis 2d illustriert.

Fig. 2a zeigt den Schaltzustand der Schalteinheit 17. Der sperrend geschaltete Zustand der Schalteinheit 17 wird als Pegel 0 und der durchgeschaltete Zustand wird als Pegel 1 in Fig. 2a angegeben.

In Fig. 2b ist der Spannungspegel an dem Messabgriff 13 schematisch dargestellt. Beginnend zu einem Zeitpunkt t0 steigt der Stromfluss durch den Messwiderstand 11 bis zu einem oberen Schwellwert S an, dann schaltet die Schalteinheit 9 in den sperrenden Zustand, und entsprechend klingt der Stromfluss durch den Messwiderstand 11 auf den unteren Schwellwert 0 ab. Die Zeitspanne zwischen den Zeitpunkten t0 und t1 ist durch die Zeitkonstante des Strompfades zwischen der Spannungsversorgung 8 und der Masse 12 vorgegeben.

Fig. 2c zeigt den entsprechenden Stromfluss durch die Magnetspule 5 des Einspritzventils 1. Zu einem Zeitpunkt t3 wird die Schalteinheit 17 durchgeschaltet, z.B. durch einen entsprechenden Befehl der Sendeeinrichtung 15. Der zusätzliche Stromflusspfad 16 verringert den komplexen Widerstand in dem Strompfad zwischen der Spannungsversorgung 8 und der Masse 12. Dadurch verringert sich auch die Zeitkonstante. Dies ist in Fig. 2b dargestellt, in welcher der Zeitpunkt t3 der Strom durch den Widerstand 11 schneller ansteigt, nach dem Schalten der Schalteinheit 9 in gleicher Weise auch schneller abfällt. Die Pulsweite der zweipunktgeregelten Stromversorgung 8' ist nun geringer. Ist beispielsweise nach dem Zeitpunkt t6 die Schalteinheit 17 wieder sperrend geschaltet, erhöht sich die Zeitkonstante, wie in Fig. 2b nach dem Zeitpunkt t6 dargestellt. Der Stromfluss durch den zusätzlichen Strompfad 16 verringert den Stromfluss durch das Einspritzventil 1, wie dies in Fig. 2c zwischen den Zeitpunkten t3 bis t6 dargestellt ist.

Die Stromverläufe, welche in den Fig. 2b und 2c angedeutet sind, sind Folge des passiven Widerstands 16, der entweder stromdurchflossen oder nicht stromdurchflossen ist. Dies führt zu einem zusätzlichen Gleichstromanteil bzw. einem positiven Strompuls, wenn eine Kapazität verwendet wird.

In Fig. 2d ist ein Ausgangssignal einer Triggereinheit dargestellt, die mit dem Eingang 2' des Einspritzventils 1 verbunden ist. Diese Triggereinheit gibt jedes Mal einen Puls aus, wenn der Stromfluss durch die Magnetspule 5 ansteigt. Solch eine Triggereinheit kann in der Pulsweitenerfassungseinrichtung 14 integriert sein. Die Erfassungseinrichtung bestimmt die Zeitspanne T1- T7 zwischen zwei aufeinander folgenden Triggerpulsen. Ferner wird die Zeitspanne T1- T7 mit einem Schwellwert verglichen, der dann entsprechend einem oberen oder einem unteren logischen Pegel zugeordnet wird.

Die Information, welche die Sendeeinrichtung 15 mittels der Schalteinheit 17 auf die Pulsweite der Stromversorgung einprägt, wird durch die Pulsweitenerfassungseinrichtung 14 und einer Signalverarbeitungseinrichtung 14' erkannt und zum Beispiel mittels eines Schwellwertes decodiert. Der Schwellwert kann an die Betriebsbedingungen angepasst werden. Hierbei können unter anderem die Änderung des Widerstands der Spulen über die Temperatur berücksichtigt werden.

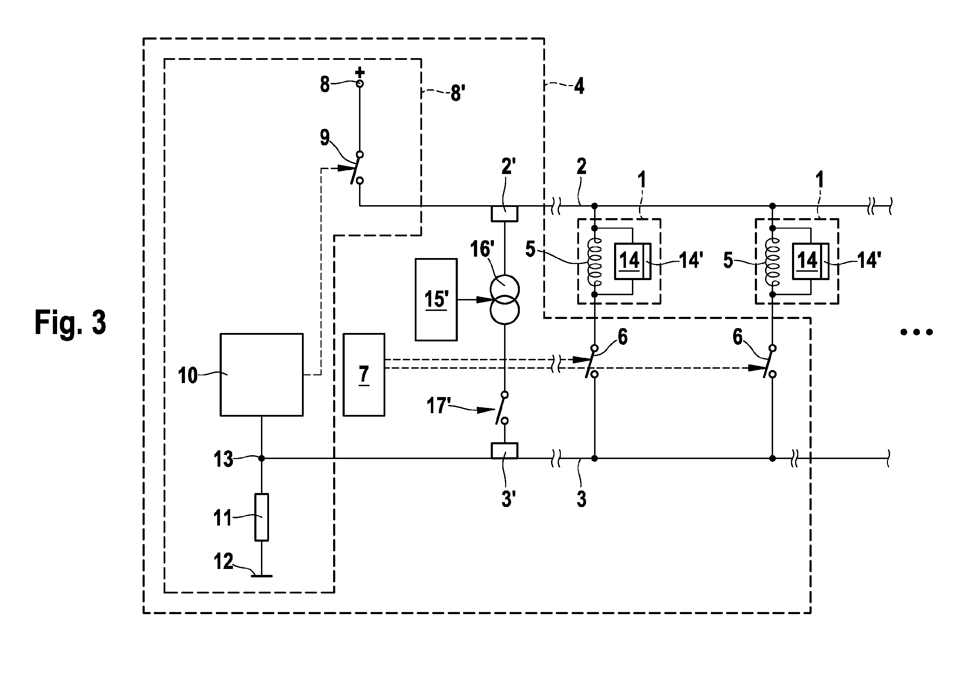

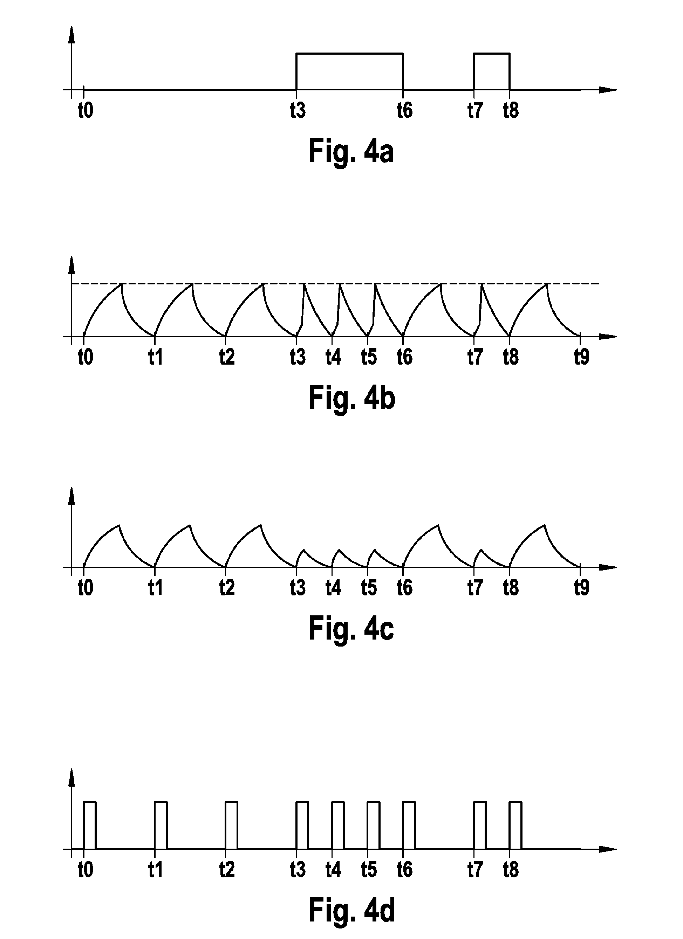

In einer zweiten Ausführungsform ist der zusätzliche Strompfad bevorzugt durch eine Konstantstromquelle 16' realisiert (Fig. 3) Die Konstanzstromquelle 16' ist mit der rückführenden Versorgungsleitung 3 und somit mit dem Messwiderstand 11 verbunden. Der zusätzliche Strom, der durch die Konstantstromquelle 16' generiert wird, erhöht das Potenzial an dem Messabgriff 13. Entsprechend schaltet die Steuereinrichtung 10 der zweipunktgeregelten Stromversorgung 8' das Schaltelement 9 früher sperrend. Dies ist schematisch in den Fig. 4a bis 4d gezeigt, welche an die Fig. 2a bis 2d angelehnt sind. Bei Zeitpunkten t0 bis t3 wird die Konstantstromquelle nicht zugeschaltet, z.B. weil ein Schaltelement 17' den zusätzlichen Strompfad sperrt. In einer anderen Variante wird der Strom aus der Konstantstromquelle 16' direkt von einer Sendeeinrichtung 15' gesteuert.

Ab dem Zeitpunkt t3 bis zu dem Zeitpunkt t6 wird die Konstantstromquelle 16 geschaltet. Es ergibt sich ein sehr rascher Anstieg des Stromflusses durch den Messwiderstand 11, wie aus Fig. 3b ersichtlich. Nachdem die zweipunktgeregelte Versorgung das Schaltelement 9 sperrend schaltet, wird die Konstantstromquelle 16 deaktiviert. Daraufhin fällt der Strom, der durch den Messwiderstand 11 fließt, ab. Das Abschalten der Konstantstromquelle kann dadurch realisiert werden, dass die Konstantstromquelle durch die zweipunktgeregelte Stromversorgung gespeist wird.

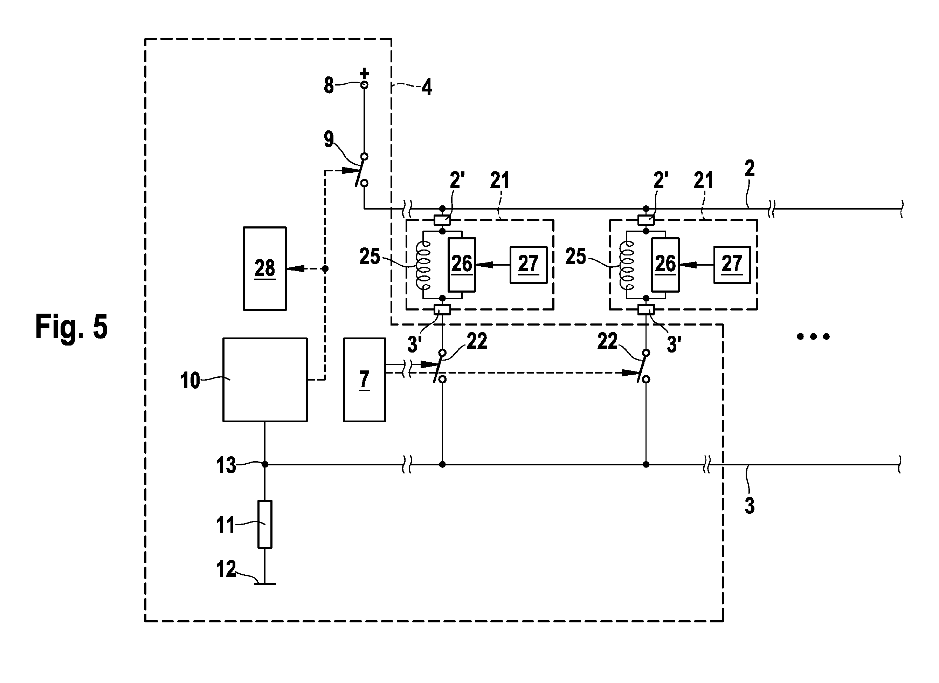

Eine dritte Ausführungsform ist in Fig. 5 gezeigt. In dieser Ausführungsform senden Einspritzventile 21 Daten an die Einspritzsteuereinheit 4. Die Einspritzsteuereinheit 4 weist gleich der ersten Ausführungsform von Fig. 1 eine zweipunktgeregelte Stromversorgung mit einer Spannungsversorgung 8, einem Schaltelement 9, einer Steuereinheit 10, einem Messwiderstand 11 auf. Darüber hinaus weist die Einspritzsteuereinheit 4 eine Adressierungseinheit 7 auf, welche mit Schaltelementen 22 gekoppelt ist, die jeweils einem Einspritzventil 21 zugeordnet sind.

Die Einspritzventile weisen neben einer Spule 25 für einen Elektromagneten einen zusätzlichen Strompfad 26 auf. Dieser zusätzliche Strompfad 26 kann durch eine Datenübertragungseinheit 27 der Spule 25 parallel geschaltet werden.

Das Funktionsprinzip zum Übertragen von Daten entspricht dem, das in Zusammenhang mit der ersten Ausführungsform von Fig. 1 erläutert wurde. Die Pulsweiten der Strompulse der zweipunktgeregelten Stromversorgung sind von der Induktivität und dem Widerstand zwischen der zuführenden und der rückführenden Versorgungsleitung 2, 3 abhängig. Mittels eines Erhöhens des Stroms durch ein Parallelschalten des zusätzlichen Strompfades 26 wird die Pulsweite verringert. Eine Pulsweitenerfassungseinrichtung ist in der Einspritzsteuereinheit 4 vorgesehen. Zweckmäßigerweise kann diese unmittelbar mit den Steuersignalen für die Schalteinheit 9 versorgt werden. Diese schaltet einen zusätzlichen Stromflusspfad 16 parallel zu den Einspritzventilen 1. Auf diese Weise sinkt der Widerstand in dem Hauptstrompfad zwischen den beiden Versorgungssträngen 2 und 3. Als Folge verringert sich auch die Zeitkonstante des Strompfades des Hauptstrompfades.

Die zusätzlichen Strompfade 26 können durch Widerstände, Kapazitäten und/oder eine Konstantstromquelle realisiert werden.

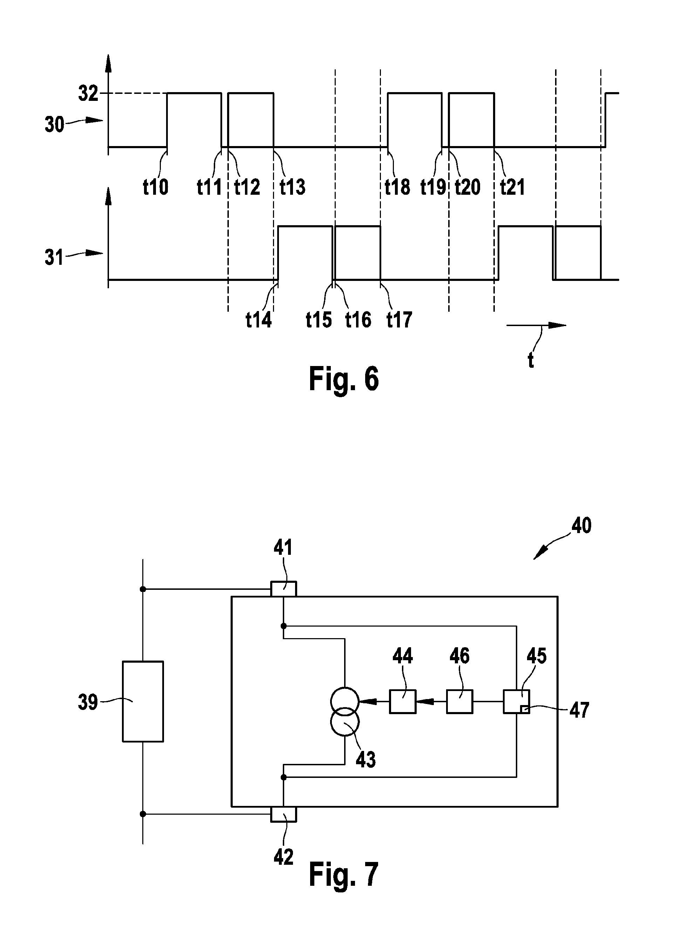

In Fig. 6 ist schematisch ein Zeitablauf zur Datenübertragung zwischen der Einspritzsteuereinheit und zwei Spritzventilen 30, 31 über die Zeit t dargestellt. Zunächst wird das erste Einspritzventil 30 aktiviert, indem Strompulse mit einer Amplitude 32 an dieses Einspritzventil 30 zu den gegebenen Zeitpunkten t10 und t11 angelegt werden. Die einzelnen Strompulse sind schematisch als ihre Umhüllende angedeutet. Nach dem Aktivieren des Einspritzventils, d.h. dem Einspritzen von Brennstoff, können Daten an das Einspritzventil 30 übermittelt werden. Dazu wird ab dem Zeitpunkt t12 bis zu dem Zeitpunkt t13 das erste Einspritzventil weiterhin adressiert. Bei der Übertragung der Daten wird der mittlere Strom der zwei-Punkt-geregelten Stromversorgung reduziert. Dies wird durch eine langsamere Taktung erreicht. Hierzu werden der obere und der untere Schwellwert der zwei-Punkt-geregelten Stromversorgung geändert. Vorzugsweise ist der mittlere Strom nun geringer als der Strom, der zum Aktivieren des Einspritzventils notwendig ist.

In entsprechenden Ausgestaltungen des Einspritzventils erfolgt eine Übertragung, bei einer Taktung die oberhalb eines Takts liegt, der beim Aktivieren des Einspritzventils verwendet wird. Gegebenfalls wird hierbei eine Einspritzung durch Schaltelemente in dem Einspritzventil unterdrückt.

Die Einspritzsteuereinheit kann Daten nach dem zuvor beschriebenen Verfahren an das Einspritzventil 30 übermitteln. Die Datenübertragung muss beendet werden, bevor das zweite Einspritzventil 31 zu dem Zeitpunkt t14 aktiviert wird. Nach der Einspritzphase des zweiten Einspritzventils 31 kann zu dem Zeitpunkt t16 eine Datenübertragung an das zweite Einspritzventil 31 vorgenommen werden. Die Datenübertragung an das zweite Einspritzventil 31 wird wiederum beendet, bevor das erste Einspritzventil 30 erneut aktiviert wird. Zu den Zeitpunkten t20 und t21 kann eine Datenübertragung von dem ersten Einspritzventil 30 an die Einspritzsteuereinheit erfolgen. Die Datenübertragung von dem zweiten Einspritzventil 31 an die Einspritzsteuereinheit kann ebenfalls nach dem Aktivieren des zweiten Einspritzventils 31 erfolgen. Vielfältige Abwandlungen der Datenübertragung zwischen den einzelnen Betätigungsphasen für Magnetaktuatoren sind möglich. Das Beispiel aus Fig. 5 lässt sich ohne weiteres auf eine größere Anzahl von Einspritzventilen erweitern, bzw. bei einem abgeschalteten Motor implementieren.

Die Datenübertragungseinheiten weisen bevorzugt eine Erkennungseinrichtung für den mittleren Strom auf. Dies kann z.B. dadurch realisiert werden, dass die Datenübertragungseinheiten ebenfalls eine Pulsweitenerkennungseinrichtung aufweisen. Hierbei kann vorteilhafterweise eine Änderung des Widerstands der Spulen für die Bestimmung des mittleren Stroms berücksichtigt werden. Unterschreitet die Pulsweite den Grenzwert, so liegt der mittlere Strom über einem Wert, der dem Grenzwert der Pulsweite zugeordnet ist. Die Datenübertragungseinheit überträgt keine Daten, wenn die Pulsweite geringer als der Grenzwert ist.

Die Pulsweite unterschreitet typischerweise den Grenzwert, wenn ein Einspritzventil aktiviert wird. Zu diesem Zeitpunkt ist ohnehin keine Datenübertragung möglich, da diese die Ansteuerung des Einspritzventils stören würde.

In einer vierten Ausführungsform (Fig. 5) ist eine Kommunikationseinrichtung 40 bereitgestellt, die sich zum Senden und Empfangen von Daten eignet. Die Kommunikationseinrichtung kann sowohl in den Einspritzventilen als auch in der Steuereinheit integriert werden. Der Verbraucher 39 des Einspritzventils ist mit der zwei-Punkt-getakteten Stromversorgung verbunden. Die Kommunikationseinrichtung ist über deren Anschlüsse 41 und 42 dem Verbraucher 39 parallel geschaltet. In der Kommunikationseinrichtung befindet sich eine Konstantstromquelle 43, die in Kombination mit einer Sendeeinheit 44 die Strompulsweite ändert und somit Daten überträgt. Ferner ist eine Pulsweitenerkennungseinrichtung 45 mit integrierter Signalauswertung 47 angeordnet, die die Länge der Strompulse erfasst und zu digitalen Signalen auswertet. Eine Schutzschaltung 46 kann eine momentan bestimmte Pulsweite mit einem Schwellwert vergleichen, bei einem Überschreiten des Schwellwertes wird verhindert, dass die Konstantstromquelle 43 einen Strom ausgibt.

Obwohl die vorliegende Erfindung anhand bevorzugter Ausführungsbeispiele beschrieben wurde, ist sie nicht darauf beschränkt.

Insbesondere kann die Kommunikationsvorrichtung mit der Schalteinrichtung an beliebiger Stelle in an den Versorgungsstrang 2, 3 angeschlossen werden. Die Kommunikationsvorrichtung kann hierzu eigene Versorgungsanschlüsse aufweisen. Eine Integration der Kommunikationsvorrichtung in der Steuervorrichtung 4 oder einem der Einspritzventile 1 ist nicht zwingend.

Die Kommunikationsvorrichtung kann dazu erweitert werden, die Pulsweite in mehr als zwei diskrete logische Pegel zu quantisieren. Dies ermöglicht eine größere Übertragungsrate.

## Patentansprüche

1. Kommunikationsvorrichtung, mit
einem Versorgungsanschluss (2', 3'), der an eine zwei-Punkt-geregelte Stromversorgung (8') anschließbar ist,
einer Pulsweitenerfassungseinrichtung (14, 45), welche mit dem Versorgungsanschluss (2', 3', 41, 42) gekoppelt ist und eine Pulsweite von Strompulsen erfasst, die durch den Versorgungsanschluss (2', 3', 41, 42) fließen, und
einer Signalverarbeitungseinrichtung (14'), die einer ersten erfassten Pulsweite einen ersten logischen Pegel und einer zweiten erfassten Pulsweite einen zweiten logischen Pegel zuordnet.

2. Kommunikationsvorrichtung, mit
einem Versorgungsanschluss (2', 3'), der an eine zwei-Punkt-geregelte Stromversorgung (8') anschließbar ist, und
einer Schalteinrichtung (17, 17', 26, 44), die zum Übertragen eines ersten logischen Pegels den Stromfluss durch den Versorgungsanschluss (2', 3') erhöht, um eine Pulsweite von Strompulsen der zwei-Punkt-geregelten Stromversorgung zu verringern.

3. Kommunikationsvorrichtung nach Anspruch 2, die beinhaltet:
eine Pulsweitenerfassungseinrichtung (14, 45), welche mit dem Versorgungsanschluss (2', 3', 41, 42) gekoppelt ist, und eine Pulsweite von Strompulsen erfasst, die durch den Versorgungsanschluss (2', 3', 41, 42) fließen und
eine Signalverarbeitungseinrichtung (14'), die einer ersten erfassten Pulsweite den ersten logischen Pegel und einer zweiten erfassten Pulsweite den zweiten logischen Pegel zuordnet.

4. Kommunikationsvorrichtung nach einem der Ansprüche 2 oder 3, die zum Erhöhen des Stromflusses durch den Versorgungsanschluss (2', 3', 41, 42) eine Konstantstromquelle (16', 43) aufweist.

5. Kommunikationsvorrichtung nach einem der Ansprüche 2 bis 4, die einen Bypass-Widerstand (16) aufweist, der eine Serienschaltung mit der Schalteinrichtung (17) bildet und wobei die Serienschaltung den Versorgungsanschluss (2') mit einem Referenzpotential (12) verbindet.

6. Kommunikationsvorrichtung nach einem der vorhergehenden Ansprüche, die in einem
Aktuator und/oder einem Einspritzventil integriert ist.

7. Kommunikationsvorrichtung nach einem der vorhergehenden Ansprüche 3 bis 6, die eine Schutzschaltung (46) aufweist, die eine Erhöhung des Stromflusses durch die Versorgungsanschlüsse (41, 42) verhindert, wenn die Pulsweitenerfassungseinrichtung (45) eine Pulsweite erfasst, die innerhalb eines vorbestimmten Pulsweitenintervalls liegt.

8. Datenübertragungsverfahren über einen Versorgungsanschluss, mit den folgenden Schritten:
Verbinden des Versorgungsanschluss (2', 3', 41, 42) mit einer Zwei-Punkt-Stromversorgung;
Erfassen der Pulsweite von Strompulsen der Zwei-Punkt-Stromversorgung an dem Versorgungsanschluss (2', 3', 41, 42); und
Zuordnen eines ersten logischen Pegels zu einer ersten erfassten Pulsweite und eines zweiten logischen Pegels zu einer zweiten erfassten Pulsweite.

9. Datenübertragungsverfahren über einen Versorgungsanschluss, mit den folgenden Schritten:
Verbinden des Versorgungsanschluss (2', 3', 41, 42) mit einer Zwei-Punkt-Stromversorgung; und
Erhöhen des Stromflusses durch den Versorgungsanschluss (2', 3', 41, 42) zum Übertragen eines ersten logischen Pegels von mindestens zwei logischen Pegeln.

10. Datenübertragungsverfahren über einen Versorgungsanschluss, wobei zum Empfangen das Verfahren nach Anspruch 8 und zum Senden das Verfahren nach Anspruch 9 ausgeführt wird.

11. Datenübertragungsverfahren über einen Versorgungsanschluss, wobei Daten an einen
Aktuator übertragen werden, welcher durch eine Zwei-Punkt-Stromversorgung aktiviert wird, wenn der mittlere Strom innerhalb eines vorbestimmten Strombereichs liegt, und eine Datenübertragung mit einem mittleren Strom erfolgt, der außerhalb des vorbestimmten Strombereichs liegt.
